# EUROPÄISCHE PATENTSCHRIFT

(11) **EP 1 683 665 B1**
(45) Veröffentlichungstag und Bekanntmachung des Hinweises auf die Patenterteilung: **26.09.2007**
(21) Anmeldenummer: 06000975.0
(22) Anmeldetag: 18.01.2006
(51) Int. Cl.: B60H 1/00

(54) **Sensoranordnung**
Sensor system
Dispositif de capteur

(30) Priorität: 22.01.2005 DE 102005003046
(43) Veröffentlichungstag der Anmeldung: 26.07.2006
(73) Patentinhaber: E+E Elektronik Ges.m.b.H., 4209 Engerwitzdorf (AT)
(72) Erfinder: Pflügl, Thomas, 4212 Neumarkt i.M. (AT)
(74) Vertreter: Hofmann, Ernst

(56) Entgegenhaltungen:
- DE-A1- 10 314 018
- DE-A1- 10 325 971
- PATENT ABSTRACTS OF JAPAN Bd. 009, Nr. 215 (M-409), 3. September 1985 (1985-09-03) & JP 60 076418 A (NIPPON DENSO KK), 30. April 1985 (1985-04-30)

## Beschreibung

Die vorliegende Erfindung betrifft eine Sensoranordnung zur Beschlagsdetektion an einer Scheibe gemäß dem Oberbegriff des Anspruches 1. Insbesondere geeignet ist erfindungsgemäße Sensoranordnung zur Beschlagsdetektion an einer Kraftfahrzeug-Windschutzscheibe.

Geeignete Sensoranordnungen zur Beschlagsdetektion an Kraftfahrzeug-Windschutzscheiben sind etwa aus der WO 01/58731 oder aus der EP 1 306 242 A1 bekannt. Hierbei werden jeweils Anordnungen vorgeschlagen, die ein auf einer Trägerplatine angeordnetes feuchteempfindliches Sensorelement umfassen. Als geeignetes Sensorelement ist vorzugsweise ein kapazitiver Dünnschichtsensor vorgesehen. Das Sensorelement ist thermisch an die Scheibe und somit an die Scheibentemperatur angekoppelt. Die thermische Kopplung erfolgt über eine dünne Klebefolie. Über die Klebefolie wird die Sensoranordnung ferner an der Scheibe befestigt.

DE-10325971 offenbart eine Sensoranordnung gemäß dem Oberbegriff des Anspruchs 1.

Wichtig für die Funktion der Sensoranordnung ist deren thermische Ankopplung an die Scheibe. Ideal wäre für eine gute thermische Ankopplung ein möglichst großflächiger Kontaktbereich zwischen der Sensoranordnung und der Scheibe. Dies ist jedoch in vielen Fällen aufgrund des zur Verfügung stehenden Bauraumes nicht realisierbar. Oftmals steht lediglich eine kleine Kontaktfläche zwischen der Sensoranordnung und der Scheibe zur Verfügung, was im Hinblick auf eine gute thermische Kopplung problematisch ist.

Aufgabe der vorliegenden Erfindung ist es, eine Sensoranordnung zur Beschlagsdetektion an einer Scheibe anzugeben, die auch unter ungünstigen Anbaubedingungen eine gute thermische Kopplung zwischen Scheibe und Sensorelement gewährleistet.

Diese Aufgabe wird gelöst durch eine Sensoranordnung mit den Merkmalen des Anspruches 1.

Vorteilhafte Ausführungsformen der erfindungsgemäßen Sensoranordnung ergeben sich aus den Maßnahmen in den abhängigen Patentansprüchen.

Erfindungsgemäß ist nunmehr vorgesehen, zur thermischen Ankopplung des Sensorelementes ein Kontaktierungselement vorzusehen, das aufsteckbar an der Trägerplatine befestigt ist und die Trägerplatine im Kontaktbereich zur Scheibe weitgehend umschließt. Vorzugsweise wird das jeweilige Kontaktierungselement hierbei unter mechanischer Spannung auf die Trägerplatine aufgeschoben, um die thermische Kopplung zu verbessern.

Es ist nunmehr nicht mehr erforderlich, dass die Trägerplatine großflächig in Kontakt mit der Scheibe ist und hierzu parallel zur Scheibe angeordnet ist. Aufgrund des vorgesehenen Kontaktierungselements ist eine Anordnung der Trägerplatine in Bezug auf die Scheibe möglich, bei der die Trägerplatine beispielsweise senkrecht oder in einem beliebigen Winkel zur Scheibe orientiert angeordnet ist. Dies gestattet eine platzsparende Ausführung der gesamten Sensoranordnung, wobei gleichzeitig die Wärmeankopplung des Sensorelements gewährleistet bleibt.

In einer möglichen Ausführungsform besitzt das Kontaktierungselement im Bereich des Sensorelements eine Ausnehmung, die den Abmessungen des Sensorelements entspricht. Ferner besteht das verwendete Kontaktierungselement mit Vorteil aus einem Material mit hoher Wärmeleitfähigkeit; ferner weist dieses vorzugsweise auch eine gewisse Elastizität auf.

Als Kontaktierungselement kommt beispielsweise eine U-förmige Metallfeder oder aber eine T-förmige Kunststoff-Hülse in Betracht. In beiden Fällen ist das Kontaktierungselement auf die Trägerplatine aufsteckbar.

In beiden Ausführungsformen lässt sich somit trotz einer nur kleinen Kontaktfläche zwischen Sensoranordnung und Scheibe eine sehr gute thermische Kopplung zwischen dem Sensorelement und der Scheibe sicherstellen. Es resultiert ein lediglich geringer thermischer Widerstand zwischen der Sensoranordnung und der Scheibe und daraus wiederum eine hinreichende Messgenauigkeit.

Aufgrund der vorzugsweise elastischen Ausgestaltung des Kontaktierungselements können zudem bestimmte Ein- und Anbautoleranzen für die Sensoranordnung ausgeglichen werden, beispielsweise Entfernungsunterschiede zwischen Sensorelement und Scheibe oder aber die erforderliche Winkelausrichtung zwischen Sensorelement und Scheibe.

Grundsätzlich kann die erfindungsgemäße Sensoranordnung als Sensorelement lediglich ein feuchteempfindliches Sensorelement aufweisen, mittels dem die relative Feuchte in Scheibennähe als Maß für eine Beschlagsneigung erfasst wird. In einer etwas aufwändigeren Variante kann neben dem feuchteempfindlichen Sensorelement zusätzlich noch ein temperaturempfindliches Sensorelement vorgesehen sein, um dergestalt ferner eine Taupunktmessung vorzunehmen. Dadurch kann über die ermittelte Temperatur im Fahrzeuginneren auch auf das Klima im Fahrzeug-Innenraum, insbesondere die dort herrschende relative Feuchte, rückgeschlossen werden. In beiden Fällen gewährleisten die erfindungsgemäßen Maßnahmen eine gute thermische Ankopplung des bzw. der eingesetzten Sensorelemente an die Scheibe.

Als vorteilhafte Maßnahme zur optimierten thermischen Kopplung erweist sich ferner für alle Ausführungsvarianten, wenn der Abstand zwischen dem Sensorelement und der Scheibe möglichst minimiert wird.

Weitere Vorteile sowie Einzelheiten der erfindungsgemäßen Sensoranordnung ergeben sich aus der nachfolgenden Beschreibung von Ausführungsbeispielen anhand der beiliegenden Figuren.

### Dabei zeigt

- Figur 1: eine perspektivische Darstellung einer ersten Ausführungsform der erfindungsgemäßen Sensoranordnung in Verbindung mit einer Scheibe;
- Figur 2a: eine Schnittansicht der Sensoranordnung aus Figur 1;
- Figur 2b: eine Schnittansicht einer gegenüber der Figur 2a geringfügig modifizierten Variante der ersten Ausführungsform;
- Figur 3a: eine Schnittansicht einer zweiten Ausführungsform der erfindungsgemäßen Sensoranordnung in Verbindung mit einer Scheibe;
- Figur 3b: eine Schnittansicht einer gegenüber der Figur 3a geringfügig modifizierten Variante der zweiten Ausführungsform;
- Figur 4: einer perspektivische Darstellung des Kontaktierungselements aus dem Ausführungsbeispiel in Figur 3.

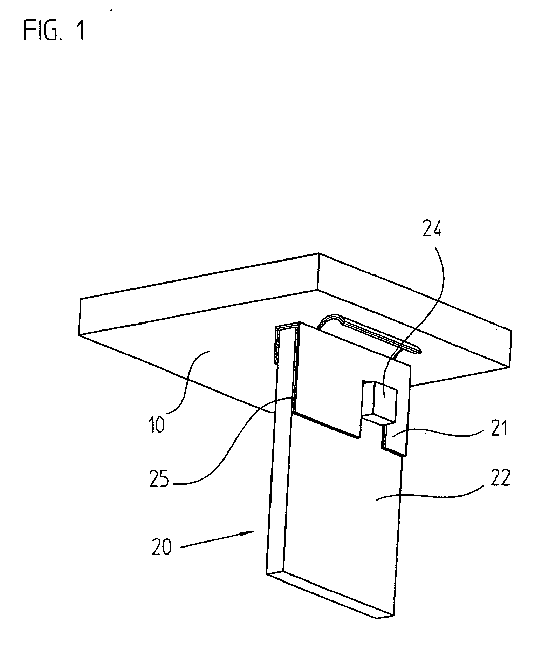

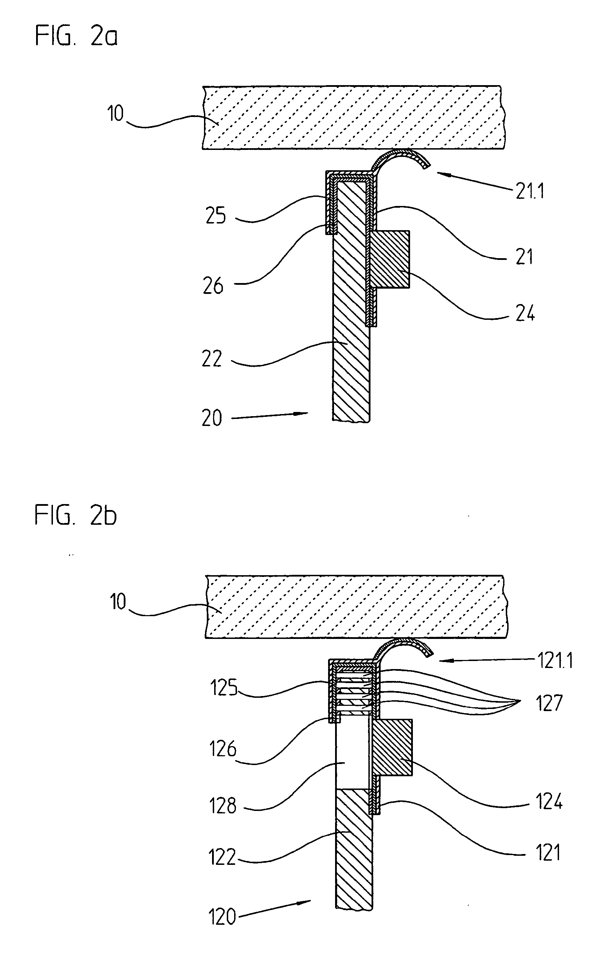

Anhand der Figuren 1, 2a und 2b sei nachfolgend eine erste Ausführungsform der erfindungsgemäßen Sensoranordnung inklusive einer geringfügig modifizierten Variante hiervon beschrieben. Während hierbei Figur 1 eine perspektivische Darstellung der Sensoranordnung 20 in Verbindung mit einem Teil einer Scheibe 10 zeigt, ist in Figur 2a eine Schnittansicht der Sensoranordnung 20 aus Figur 1 dargestellt.

Die Scheibe 10 kann etwa die Windschutzscheibe eines Kraftfahrzeugs darstellen, an deren Innenseite die erfindungsgemäße Sensoranordnung 20 zur Beschlagsdetektion angeordnet ist. Über die Sensoranordnung 20 wird die beginnende Beschlagsneigung an dieser Scheibe 10 erfasst und die entsprechenden Signale dazu genutzt, mittels der Heiz- und/oder Klimaanlage geeignete Gegenmaßnahmen zu ergreifen.

Erfasst wird über die erfindungsgemäße Sensoranordnung 20 letztlich die Beschlagsneigung der Scheibe 10. Je nach Ausführungsform wird hierbei lediglich die relative Feuchte in Scheibennähe erfasst oder aber zusätzlich eine Temperaturmessung sowie eine Taupunktsberechnung vorgenommen. Während für die erstgenannte Variante ein feuchteempfindliches Sensorelement ausreicht, ist im zweiten Fall noch ein zusätzliches temperaturempfindliches Sensorelement erforderlich. In beiden Fällen ist es hierbei vorteilhaft, wenn die Sensoranordnung 20 möglichst die gleiche Temperatur wie die Scheibe 10 annimmt. Gefordert ist also eine möglichst gute thermische Anbindung bzw. thermische Ankopplung der Sensoranordnung 20 und des bzw. der zugehörigen Sensorelemente, wie z.B. Temperatur- und Feuchtesensorelemente an die Scheibe 10. Im vorliegenden Beispiel wie auch im nachfolgenden wird lediglich ein feuchteempfindliches Sensorelement zur Erfassung der Beschlagsneigung vorgesehen.

Die thermische Ankopplung der Sensoranordnung 20 an die Scheibe 10 erfolgt im vorliegenden Beispiel über ein Kontaktierungselement in Form einer Metallfeder 21, die im Kontaktbereich zur Scheibe 10 auf die Trägerplatine 22 aufgesteckt wird. Als geeignetes Material für die Metallfeder 21 kommen grundsätzlich gut wärmeleitende Metalle in Betracht, wie beispielsweise Kupfer, Aluminium oder Federstahl. Auf der Trägerplatine 22 ist ferner in schematisierter Form das feuchteempfindliche Sensorelement 24 angedeutet. Das feuchteempfindliche Sensorelement 24 ist in bekannter Art und Weise als kapazitiver Dünnschichtsensor ausgebildet; im Fall der Verwendung eines zusätzlichen temperaturempfindliche Sensorelements kann hierzu etwa ein bekanntes resisitives Element wie ein Platin-Widerstandselement zum Einsatz kommen.

Auf der Trägerplatine 22 sind Leiterbahnen zur elektrischen Kontaktierung des Sensorelements 24 und zur Verbindung desselben mit anderen Bauelementen auf der Trägerplatine 22 angeordnet. In Figur 2 sind die Anschlussleitungen für das Sensorelement 24 dargestellt und hierbei mit dem Bezugszeichen 26 versehen; weitere Leiterbahnen und elektronische Bauelemente auf der Trägerplatine 22 sind in den Figuren aus Gründen der besseren Übersichtlichkeit nicht dargestellt.

Das Kontaktierungselement bzw. die Metallfeder 21 umschließt im Kontaktbereich zur Scheibe 10 die Trägerplatine 2 weitgehend. Lediglich im Bereich des Sensorelementes 24 besitzt die Metallfeder 21 eine Ausnehmung, die etwa den Abmessungen des Sensorelements 24 auf der Trägerplatine 22 entspricht. Über die Ausnehmung ist sichergestellt, dass das Sensorelement 24 mit der Umgebungsluft im Austausch steht .

Im dargestellten Ausführungsbeispiel ist auf der Innenseite der Metallfeder 21, die der Trägerplatine 22 zugewandt ist, zudem eine wärmeleitfähige, elektrisch isolierende Schicht in Form einer dünnen Wärmeleitfolie 25 angeordnet. Vorzugsweise dient als Wärmeleitfolie etwa eine selbstklebende Polymidfolie mit einer Dicke zwischen 50µm und 200µm. Alternativ kann an dieser Stelle als elektrisch isolierende Schicht auch eine andere aufgeklebte oder aufgespritzte Isolierschicht angeordnet werden.

Die Wärmeleitfolie 25 ist ferner an einem Kontaktierungsteil 21.1 der Metallfeder 21 angeordnet, das den Kontaktbereich zwischen Metallfeder 21 und Scheibe 10 darstellt. Hierbei ist die Wärmeleitfolie 25 zwischen dem Kontaktierungsteil 21.1 und der Scheibe 10 angeordnet. Das Kontaktierungsteil 21.1 ist in diesem Beispiel als Fortsatz der Metallfeder 21 an deren U-Ende ausgebildet und erstreckt sich entlang der Trägerplatinenkante, die in Richtung Scheibe 10 orientiert ist.

Der Wärmefluss zwischen Scheibe 10 und Sensorelement 24 verläuft im dargestellten Beispiel von der Scheibe 10 über die Wärmeleitfolie 25 am Kontaktierungsteil 21.1, die Metallfeder 21, die Wärmeleitfolie 25, die Anschlussleitungen 26 zum Sensorelement 24. Den größten Einfluss auf die thermische Kopplung hat hierbei die Metallfeder 21.

Sowohl die Scheibe 10 als auch die Trägerplatine 22 werden im dargestellten Ausführungsbeispiel nur durch die Wärmeleitfolie 25 berührt. Auf Seiten der Scheibe 10 wird hierdurch sichergestellt, dass die Scheibe 10 durch die Metallfeder 21 nicht verkratzt wird. Auf der Seite der Trägerplatine 22 wird ein elektrischer Kurzschluss zwischen mehreren Leiterbahnen bzw. Anschlussleitungen 26 des Sensorelements 24 vermieden, wobei aber gleichzeitig eine gute thermische Ankopplung aller Anschlussleitungen 26 des Sensorelements sichergestellt ist.

Als vorteilhaft erweist sich ferner, dass durch die gegebene Elastizität des Kontaktierungselements bzw. der Metallfeder 21 auch vorgegebene Anbautoleranzen ausgeglichen werden können, beispielsweise Entfernungsunterschiede zwischen Sensorelement und Scheibe oder aber die erforderliche Winkelausrichtung zwischen Sensorelement und Scheibe.

Eine gegenüber dem Ausführungsbeispiel in Figur 2a geringfügig modifizierte Variante des ersten Ausführungsbeispiels der erfindungsgemäßen Sensoranordnung ist in Figur 2b in einer Schnittansicht gezeigt. Nachfolgend sei lediglich auf die Unterscheide zum Beispiel in Figur 2a eingegangen.

So ist zum einen zusätzlich vorgesehen, in der Trägerplatine 122 in einem Teilbereich Bohrungen 127 anzuordnen, die mit einer wärmeleitfähigen Beschichtung versehen sind, wie dies etwa auch aus der WO 01/58731 A1 bekannt ist. Die Bohrungen werden im vorliegenden Beispiel lediglich im dem Teilbereich der Trägerplatine 122 angeordnet, die von der Metallfeder 121 umgriffen werden. Durch die wärmeleitfähig beschichteten Bohrungen 127 in diesem Teilbereich lässt sich der resultierende thermische Gesamtwiderstand weiter verringern.

Zum anderen ist in dieser Variante vorgesehen, das Sensorelement 124 über einer Ausnehmung 128 der Trägerplatine 122 anzuordnen, wie dies ebenfalls in der WO 01/58731 A1 vorgeschlagen wurde. Diese Montagevariante für das Sensorelement 124 erweist sich dann als vorteilhaft, wenn die feuchteempfindliche bzw. aktive Seite des Sensorelements 124 in Richtung der Trägerplatine 122 orientiert ist. Im Beispiel der Figur 2a ist eine Montage des Sensorelements 24 vorgesehen, bei dem die feuchteempfindliche Seite von der Trägerplatine 22 weg orientiert ist.

Das erläuterte erste Ausführungsbeispiel mit einem als Metallfeder ausgebildetem Kontaktierungselement lässt sich im Rahmen der vorliegenden Erfindung selbstverständlich noch weiter abwandeln. Zu erwähnen wäre etwa eine Ausgestaltung der Metallfeder derart, dass diese die Trägerplatine seitlich umklammert. Ferner könnte das Kontaktierungsteil 21.1 auch über den U-förmigen Teil der Metallfeder hinweg gebogen ausgebildet werden etc..

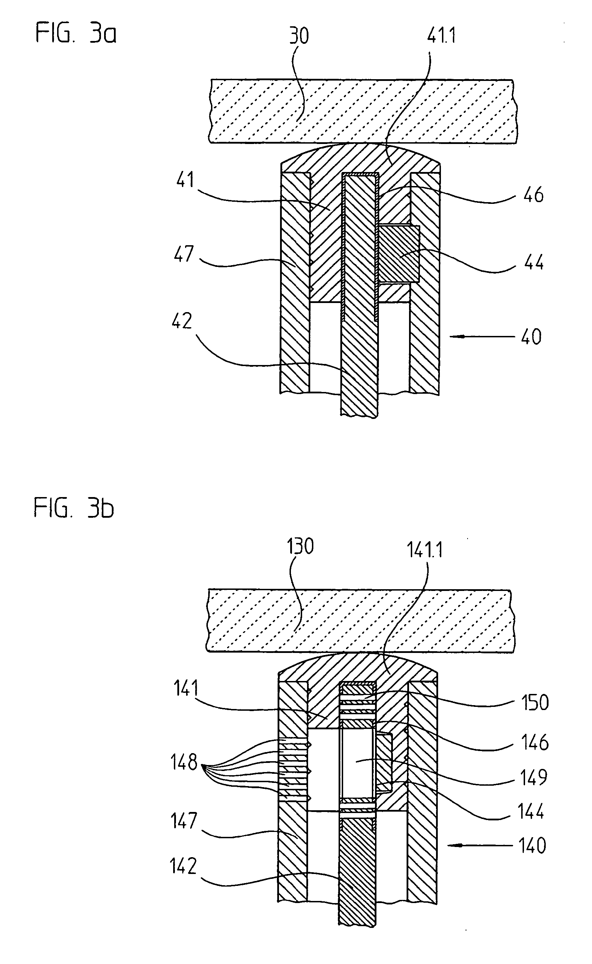

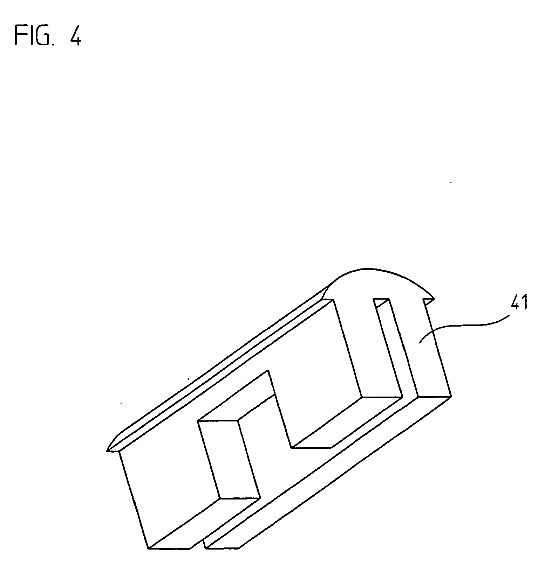

Ein zweites Ausführungsbeispiel der erfindungsgemäßen Sensoranordnung sei nachfolgend anhand der Figuren 3a, 3b und 4 inklusive einer geringfügig modifizierten Variante hiervon beschrieben. Während Figur 3a eine Schnittansicht einer zweiten Ausführungsform der erfindungsgemäßen Sensoranordnung in Verbindung mit einer Scheibe zeigt, ist in Figur 4 das verwendete Kontaktierungselement dieses Beispiels perspektivisch dargestellt. Erneut umfasst das dargestellte Ausführungsbeispiel lediglich eine feuchteempfindliches Sensorelement 44 und kein temperaturempfindliches Sensorelement; selbstverständlich könnte auch diese Variante noch um ein weiteres temperaturempfindliches Sensorelement ergänzt werden, um dergestalt eine Taupunktsmessung vorzunehmen etc..

Wie aus Figur 3a ersichtlich, umfasst die erfindungsgemäße Sensoranordnung 40 in diesem Ausführungsbeispiel wiederum die Trägerplatine 42, auf der das feuchteempfindliche Sensorelement 44 angeordnet und mittels Anschlussleitungen 46 elektrisch kontaktiert wird. Als Kontaktierungselement ist in diesem Beispiel nunmehr eine aufsteckbare Kunststoff-Hülse 41 vorgesehen, die im Kontaktbereich zwischen Scheibe 30 und Sensoranordnung 40 auf die Trägerplatine 42 mit dem Sensorelement 44 aufgesteckt wird. Die Kunststoff-Hülse 41 besitzt in etwa einen T-förmigen Querschnitt, wobei der Kontaktierungsbereich 41.1 mit der Scheibe durch den T-Querträger gebildet wird. Im T-Längsteil ist die Trägerplatine 42 mit dem Sensorelement 44 angeordnet, wobei die Kunststoff-Hülse im Bereich gegenüber vom Sensorelement eine Ausnehmung aufweist. Das Sensorelement 44 ist in dieser Variante der zweiten Ausführungsform derart auf der Trägerplatine 42 angeordnet, dass die feuchteempfindliche Seite in von der Trägerplatine 42 weg orientiert ist. Die Form der Kunststoff-Hülse 41 mit der vorgesehenen Ausnehmung für das Sensorelement 44 ist insbesondere aus der perspektivischen Darstellung in Figur 4 ersichtlich.

Über die Kunststoff-Hülse 41 wird im T-Längsteil ferner noch ein Gehäuse 47 geschoben, so dass eine mechanisch stabile Gesamtkonstruktion resultiert. Ferner wird dadurch erreicht, dass die Kunststoff-Hülse 41 dadurch noch stärker an die metallischen Anschlussleitungen 46 gedrückt werden und derart eine weitere Reduktion des thermischen Widerstands resultiert.

Als Material für die Kunststoff-Hülse 41 wird ein thermisch gut leitendes Kunststoff-Material verwendet, das zudem elektrisch isolierend ausgelegt ist. Hierzu kommt etwa ein mit wärmeleitenden Keramikmaterial gefülltes Silikonmaterial in Betracht.

Zur Verbesserung der thermischen Kopplung zwischen der Scheibe 30 und dem Sensorelement 44 erweist es sich bei diesem Ausführungsbeispiel zudem als vorteilhaft, den Kontaktierungsteil, d.h. den T-Querträger flächenmäßig möglichst groß zu machen.

Die Kunststoff-Hülse 41 wird vorzugsweise unter einer gewissen mechanischen Spannung auf den der Scheibe 30 zugewandten Teil der Trägerplatine 42 geschoben. Hierdurch drückt die Kunststoff-Hülse 41 in diesem Bereich auf die Anschlussleitungen 46 des Sensorelements 44. Aufgrund des innigen Kontakts resultiert an dieser Stelle ein kleiner thermischer Kontaktwiderstand. Um diesen Effekt zu verstärken ist es zudem vorteilhaft, wen die Anschlussleitungen 46 des Sensorelements 44 möglichst großflächig ausgebildet werden und in Richtung der Scheibe 30 angeordnet sind. Ferner kann auch die Stirnseite der Trägerplatine zur nochmals verbesserten thermischen Kopplung metallisiert werden.

Über das Gehäuse 47 und die Scheibe 30 wird die Kunststoff-Hülse letztlich großflächig gegen die thermisch gut leitenden Anschlussleitungen 46 gedrückt, wodurch an dieser Stelle der thermische Widerstand sehr gering wird.

Aufgrund der Elastizität der Kunststoff-Hülse 42 ist es wiederum möglich, vorgegebene Einbautoleranzen für die erfindungsgemäße Sensoranordnung auszugleichen. Die Eindrücktiefe des elastischen Materials wird hierbei so ausgelegt, dass unterschiedliche Einbautiefen der Sensoranordnung ausgeglichen werden können und stets der thermische Kontakt zur Scheibe sichergestellt ist.

Eine wiederum nur geringfügig modifizierte Variante der zweiten Ausführungsform ist in Figur 3b in einer Schnittansicht dargestellt. Nachfolgend seien nur die Unterschiede zum Beispiel in Figur 3a erläutert. So sind analog zum Beispiel in Figur 2a Bohrungen 150 in Teilbereichen der Trägerplatine 142 angeordnet, die mit einer wärmeleitfähigen Beschichtung versehen sind. Ferner ist das Sensorelement 144 über einer Ausnehmung 149 der Trägerplatine 142 angeordnet. Die feuchteempfindliche Seite des Sensorelements 144 ist in dieser Variante in Richtung der Ausnehmung 149 orientiert. Um sicherzustellen, dass die feuchteempfindliche Seite des Sensorelements 144 bei dieser Montageart auch in Kontakt mit der Umgebungsluft kommt, weist das Gehäuse 147 im Bereich der Ausnehmung ferner Schlitze 148 auf, über die eine entsprechende Luftzirkulation erfolgen kann. Die verwendete Kunststoff-Hülse 141 weist in dieser Variante ferner keine Ausnehmung für das Sensorelement 144 auf, sondern wird vollständig über das Sensorelement 144 geschoben. Dies ist im vorliegenden Fall möglich, da die aktive bzw. feuchteempfindliche Seite des Sensorelements 144 in Richtung der Ausnehmung 149 der Trägerplatine 142 orientiert ist.

Auch das zweite Ausführungsbeispiel mit einer als Kunststoff-Hülse ausgebildetem Kontaktierungselement lässt sich im Rahmen der vorliegenden Erfindung noch weiter abwandeln. So wäre es etwa möglich, den Längsteil der Kunststoff-Hülse ungeschlitzt auszuführen und diesen mittels des Gehäuses nur auf eine Seite der Trägerplatine zu pressen. Darüberhinaus gibt es im Rahmen der vorliegenden Erfindung selbstverständlich noch weitere Ausgestaltungsmöglichkeiten für die Sensoranordnung.

## Patentansprüche

1. Sensoranordnung zur Beschlagsdetektion an einer Scheibe, bestehend aus einer Trägerplatine, auf der mindestens ein feuchteempfindliches Sensorelement angeordnet ist, wobei das Sensorelement thermisch an die Scheibe angekoppelt ist,
**dadurch gekennzeichnet,**
**dass** zur thermischen Ankopplung des Sensorelementes (24; 44; 124; 144) ein Kontaktierungselement (21; 41; 121; 141) dient, das aufsteckbar an der Trägerplatine (22; 42; 122; 142) befestigt ist und die Trägerplatine (22; 42; 122; 142) im Kontaktbereich zur Scheibe (10; 30; 110; 130) weitgehend umschließt.

2. Sensoranordnung nach Anspruch 1, **dadurch gekennzeichnet, dass** das Kontaktierungselement (21; 41; 121; 141) im Bereich des Sensorelements (24; 44; 124; 144) eine Ausnehmung besitzt, die etwa den Abmessungen des Sensorelements (24; 44; 124; 144) entspricht.

3. Sensoranordnung nach Anspruch 1, **dadurch gekennzeichnet, dass** das Kontaktierungselement (21; 41; 121; 141) aus einem Material mit hoher Wärmeleitfähigkeit besteht.

4. Sensoranordnung nach Anspruch 1, **dadurch gekennzeichnet, dass** das Kontaktierungselement (21; 41; 121; 141) elastisch ausgebildet ist und unter mechanischer Spannung auf die Trägerplatine (22; 42; 122; 142) aufsteckbar ist.

5. Sensoranordnung nach mindestens einem der Ansprüche 1-4, **dadurch gekennzeichnet, dass** das Kontaktierungselement (21; 121) aus einer Metallfeder besteht.

6. Sensoranordnung nach Anspruch 5, **dadurch gekennzeichnet, dass** im Kontaktbereich zwischen der Metallfeder und der Trägerplatine (22; 122) eine wärmeleitfähige, elektrisch isolierende Schicht (25; 125) angeordnet ist.

7. Sensoranordnung nach Anspruch 5, **dadurch gekennzeichnet, dass** die im Kontaktbereich zwischen der Metallfeder und der Scheibe (10; 110) eine wärmeleitfähige, elektrisch isolierende Schicht (25; 125) angeordnet ist.

8. Sensoranordnung nach Anspruch 6 oder 7, **dadurch gekennzeichnet, dass** die wärmeleitfähige, elektrisch isolierende Schicht (25; 125) aus einer selbstklebenden Polyamid-Folie besteht.

9. Sensoranordnung nach Anspruch 5, **dadurch gekennzeichnet, dass** die Metallfeder aus Kupfer oder Aluminium oder Federstahl besteht.

10. Sensoranordnung nach mindestens einem der Ansprüche 1 - 4, **dadurch gekennzeichnet, dass** das Kontaktierungselement (41; 141) aus einer aufsteckbaren Kunststoff-Hülse besteht.

11. Sensoranordnung nach Anspruch 10, **dadurch gekennzeichnet, dass** die Kunststoff-Hülse eine T-förmigen Querschnitt besitzt, wobei der T-Querträger für den Kontakt mit der Scheibe (30; 130) vorgesehen ist und im T-Längsteil die Trägerplatine (42; 142) mit dem Sensorelement (44; 144) angeordnet ist.

12. Sensoranordnung nach Anspruch 10, **dadurch gekennzeichnet, dass** die Kunststoff-Hülse aus einem mit wärmeleitenden Keramikmaterial gefüllten Silikonmaterial besteht.

13. Sensoranordnung nach Anspruch 10, **dadurch gekennzeichnet, dass** die Anschlussleitungen (46; 146) des Sensorelements (44; 144) auf der Trägerplatine (42; 142) großflächig ausgebildet und in Richtung der Scheibe (30; 130) angeordnet sind.

14. Sensoranordnung nach mindestens einem der vorangehenden Ansprüche, **dadurch gekennzeichnet, dass** neben dem mindestens einen feuchteempfindlichen Sensorelement (26; 46; 126; 146) ferner mindestens ein temrperaturempfindliches Sensorelement auf der Trägerplatine (22; 42; 122; 142) angeordnet ist.

15. Sensoranordnung nach mindestens einem der vorangehenden Ansprüche, **dadurch gekennzeichnet, dass** die Trägerplatine (122; 142) zumindest im Bereich des Kontaktierungselements (121; 141) Bohrungen (127; 150) aufweist, die mit einer wärmleitfähigen Beschichtung versehen sind.

16. Sensoranordnung nach mindestens einem der vorangehenden Ansprüche, **dadurch gekennzeichnet, dass** das Sensorelement (124; 144) über einer Ausnehmung (128; 149) der Trägerplatine (122; 142) montiert ist, wobei die feuchteempfindliche Seite des Sensorelements (124; 144) in Richtung der Ausnehmung (128; 149) orientiert ist.

## Claims

1. A sensor arrangement for mist detection on a pane, consisting of a supporting plate on which is disposed at least one sensor element sensitive to moisture, wherein the sensor element is thermally coupled to the pane,
**characterized in that**,
a contacting element (21; 41; 121; 141) serves for the thermal coupling of the sensor element (24;44; 124; 144) and is fixed on the supporting plate (22; 42; 122; 142) in push on manner and largely embraces the supporting plate (22; 42; 122; 142) in the contact region to the pane (10; 30; 110; 130).

2. A sensor arrangement according to claim 1, **characterized in that** the contacting element (21; 41; 121; 141) has an opening in the region of the sensor element (24;44; 124; 144) which corresponds approximately to the dimensions of the sensor element (24;44; 124; 144).

3. A sensor arrangement according to claim 1, **characterized in that** the contacting element (21; 41; 121; 141) consists of a material with high thermal conductivity.

4. A sensor arrangement according to claim 1, **characterized in that** the contacting element (21; 41; 121; 141) is formed elastically and can be pushed on to the supporting plate (22; 42; 122; 142) under mechanical tension.

5. A sensor arrangement according to at least one of claims 1 - 4, **characterized in that** the contacting element (21; 121) consists of a metal spring.

6. A sensor arrangement according to claim 5, **characterized in that** a heat conducting, electrically insulating layer (25; 125) is disposed in the contact region between the metal spring and the supporting plate (22; 122).

7. A sensor arrangement according to claim 5, **characterized in that** a heat conducting, electrically insulating layer (25; 125) is disposed in the contact region between the metal spring and the pane (10, 110).

8. A sensor arrangement according to claim 6 or 7, **characterized in that** the heat conducting, electrically insulating layer (25; 125) consists of a self-adhesive polyamide film.

9. A sensor arrangement according to claim 5, **characterized in that** the metal spring consists of copper or aluminium or spring steel.

10. A sensor arrangement according to at least one of claims 1 - 4, **characterized in that** the contacting element (41; 141) consists of a push on plastics sleeve.

11. A sensor arrangement according to claim 10, **characterized in that** the plastics sleeve has a T-shaped cross-section, wherein the T cross bar is provided for the contact with the pane (30; 130) and the supporting plate (42; 142) with the sensor element (44; 144) is disposed in the T upright.

12. A sensor arrangement according to claim 10, **characterized in that** the plastics sleeve consists of silicone material filled with heat conducting ceramic material.

13. A sensor arrangement according to claim 10, **characterized in that** the terminal lines (46; 146) of the sensor element (44; 144) are formed with large area on the supporting plate (42; 142) and are arranged in the direction of the pane (30; 130).

14. A sensor arrangement according to at least one of the preceding claims, **characterized in that** at least one temperature sensitive element is further arranged on the supporting plate (22; 42; 122; 142) as well as the at least one moisture sensitive sensor element (24; 44; 124; 144).

15. A sensor arrangement according to at least one of the preceding claims, **characterized in that** the supporting plate (122; 142) has bores (127; 150) at least in the region of the contacting element (121; 141) which are provided with a heat conducting coating.

16. A sensor arrangement according to at least one of the preceding claims, **characterized in that** the sensor element (124; 144) is mounted over a recess (128; 149) of the supporting plate (122; 142), wherein the side of the sensor element (124; 144) sensitive to moisture is orientated in the direction of the recess (128; 149).

## Revendications

1. Dispositif de capteur pour la détection de buée sur une vitre, constitué d'une platine support, sur laquelle est disposé au moins un élément capteur sensible à l'humidité, ledit élément capteur étant couplé thermiquement à la vitre,
**caractérisé en ce que**
pour le couplage thermique de l'élément capteur (24; 44; 124; 144), il est prévu un élément de contact (21; 41; 121; 141) qui est fixé de manière emboîtable à la platine support (22; 42; 122; 142) et entoure en grande partie la platine support (22; 42; 122; 142) dans la zone de contact avec la vitre (10; 30; 110; 130).

2. Dispositif de capteur selon la revendication 1, **caractérisé en ce que** l'élément de contact (21; 41; 121; 141), dans la région de l'élément capteur (24; 44; 124; 144), présente un évidement dont les dimensions correspondent à peu près à celles de l'élément capteur (24; 44; 124; 144).

3. Dispositif de capteur selon la revendication 1, **caractérisé en ce que** l'élément de contact (21; 41; 121; 141) est réalisé en un matériau à conductibilité thermique élevée.

4. Dispositif de capteur selon la revendication 1, **caractérisé en ce que** l'élément de contact (21; 41; 121; 141) est élastique et peut être emboîté sous contrainte mécanique sur la platine support (22; 42; 122; 142).

5. Dispositif de capteur selon au moins une des revendications 1 à 4, **caractérisé en ce que** l'élément de contact (21; 121) est constitué d'un ressort métallique.

6. Dispositif de capteur selon la revendication 5, **caractérisé en ce qu'**une couche (25; 125) électriquement isolante mais conductrice de la chaleur est disposée dans la zone de contact entre le ressort métallique et la platine support (22; 122).

7. Dispositif de capteur selon la revendication 5, **caractérisé en ce qu'**une couche (25; 125) électriquement isolante, conductrice de la chaleur est disposée dans la zone de contact entre le ressort métallique et la vitre (10; 110).

8. Dispositif de capteur selon la revendication 6 ou 7, **caractérisé en ce que** la couche (25; 125) électriquement isolante, conductrice de la chaleur est constituée d'un film de polyamide autoadhésif.

9. Dispositif de capteur selon la revendication 5, **caractérisé en ce que** le ressort métallique est réalisé en cuivre, aluminium ou acier à ressorts.

10. Dispositif de capteur selon au moins une des revendications 1 à 4, **caractérisé en ce que** l'élément de contact (41; 141) est composé d'un manchon en matière plastique emboîtable.

11. Dispositif de capteur selon la revendication 10, **caractérisé en ce que** le manchon en matière plastique présente une section en forme de T, la barre transversale du T étant prévue pour le contact avec la vitre (30; 130), et la platine support (42; 142), avec l'élément capteur (44; 144), étant disposée dans la partie verticale du T.

12. Dispositif de capteur selon la revendication 10, **caractérisé en ce que** le manchon en matière plastique se compose d'un matériau silicone rempli avec un matériau céramique thermoconducteur.

13. Dispositif de capteur selon la revendication 10, **caractérisé en ce que** les conducteurs de connexion (46; 146) de l'élément capteur (44; 144) sont réalisés sur une grande surface sur la platine support (42; 142) et disposés en direction de la vitre (30; 130).

14. Dispositif de capteur selon au moins une des revendications précédentes, **caractérisé en ce que**, en plus de l'élément capteur (26; 46; 126; 146) sensible à l'humidité, au nombre d'au moins un, il est prévu au moins un élément capteur sensible à la température sur la platine support (22; 42; 122; 142).

15. Dispositif de capteur selon au moins une des revendications précédentes, **caractérisé en ce que** la platine support (122; 142) présente au moins dans la région de l'élément de contact (121; 141) des perçages (127; 150) qui sont pourvus d'un revêtement thermoconducteur.

16. Dispositif de capteur selon au moins une des revendications précédentes, **caractérisé en ce que** l'élément capteur (124; 144) est monté au-dessus d'un évidement (128; 149) de la platine support (122; 142), la face sensible à l'humidité de l'élément capteur (124; 144) étant orientée en direction de cet évidement (128; 149).
